## Europäisches Patentamt
## European Patent Office
## Office européen des brevets

(19)

(11) Veröffentlichungsnummer: **0 032 232**
**B1**

(12)

# EUROPÄISCHE PATENTSCHRIFT

(45) Veröffentlichungstag der Patentschrift:
08.08.84

(51) Int. Cl.³: **G 11 B 5/09**

(21) Anmeldenummer: **80108136.5**

(22) Anmeldetag: **22.12.80**

(54) **Digitales Übertragungssystem.**

(30) Priorität: **09.01.80 GB 8000710**

(43) Veröffentlichungstag der Anmeldung:
**22.07.81 Patentblatt 81/29**

(45) Bekanntmachung des Hinweises auf die Patenterteilung:
**08.08.84 Patentblatt 84/32**

(84) Benannte Vertragsstaaten:
**AT BE CH DE FR IT LI LU NL SE**

(73) Patentinhaber: **POLYGRAM GmbH, Harvestehuder Weg 1-4, D-2000 Hamburg 13 (DE)**

(72) Erfinder: **Griffiths, Frank Anthony, 105 Hillcroft Crescent, Oxhey Hertfordshire (GB)**
Erfinder: **Hankinson, Joseph Roy, 36 Estcourt Road, Watford Hertfordshire (GB)**

(74) Vertreter: **Mehl, Ernst, Dipl.-Ing., Postfach 22 01 76, D-8000 München 22 (DE)**

(56) Entgegenhaltungen:
**DE - A - 1 449 786**
**DE - A - 2 613 018**
**DE - A - 2 627 618**
**US - A - 3 208 057**
**US - A - 3 771 136**

**IBM TECHNICAL DISCLOSURE BULLETIN, Band 15, Heft 9, Februar 1973, NEW YORK (US) J.W. IRWIN:** "Recovery from write check conditions", Seiten 2946-2947
**IBM TECHNICAL DISCLOSURE BULLETIN, Band 16, Heft 11, April 1974, NEW YORK (US) W.E. ICE:** "Bit ring synchronization to magnetic recorded data", seite 3754
**IBM TECHNICAL DISCLOSURE BULLETIN, Band 18, Heft 6, November 1975, NEW YORK (US) D.M. LEWIS:** "Serial data recording" Seiten 1726-1727

(56) Entgegenhaltungen: (Fortsetzung)
**ELECTRONIC DESIGN, Band 26, Heft 19, September 1978, ROCHELLE PARK (US) BAL et al.:** "LSI controller makes it easier to tie a floppy drive to a computer", Seiten 90-96

## Beschreibung

Die Erfindung bezieht sich auf ein System zur Steuerung der Übertragung von durch Zeitschlitze in Blöcke unterteilter digitaler Information, bei dem jeder Block eine Anfangssynchronisierinformation aufweist, an die sich weitere Synchronisierinformationen und in Teilblöcke unterteilte Daten anschließen und bei dem die Synchronisierinformationen zur Steuerung eines ersten Zählers herangezogen werden.

Ein System dieser Art ist beispielsweise durch die Literaturstelle IBM TDB, Vol. 15, Nr. 9, Februar 1973, Seiten 2946 und 2947 bekannt. Hierbei geht es im Zusammenhang mit der Zählung ausschließlich darum, die innerhalb eines Datenblocks auftretenden Bits zu zählen, wobei die weiteren Synchronisierinformationen eine Grobzählung im Sinne eines Zählens der Datenblöcke ermöglichen. Auf diese Weise lassen sich Fehler in einem Datenblock erkennen und durch geeignete Maßnahmen unterdrücken. Diese Art des Zählers gewährleistet jedoch nicht eine gegen Störungen sichere Synchronisation, wie sie insbesondere bei der Verarbeitung von digitalen Tonaufzeichnungen erforderlich ist.

Wenn digitale Information in Blöcke aufgenommen wird, wird zur Wiedergabe der Information üblicherweise eine Synchronisiereinrichtung verwendet, die es ermöglicht, die Identität der Datenworte innerhalb der Datenblöcke festzustellen. Beispielsweise werden bei einem Aufnahmegerät für digitale Toninformationen die innerhalb eines Blocks vorhandenen Datenbits vor ihrer Aufnahme auf das Magnetband gewöhnlich in der Zeitfolge umgeordnet, um das Erkennen und die Korrektur von Fehlern zu erleichtern. Bei der Wiedergabe müssen dann die Daten erneut umgeordnet werden, um die Datenwörter in ihrer ursprünglichen Form und Ordnung wieder zu erhalten. Das Umordnen geschieht üblicherweise mit Hilfe eines Pufferspeichers. Das Einschreiben der Information in den Pufferspeicher erfordert eine genaue Synchronisation, weil die Daten ansonsten nicht einwandfrei in die verschiedenen Speicherplätze des Speichers eingeschrieben werden und die Information dann auch nicht richtig ausgelesen werden kann. Andere Systeme für die Übertragung von Daten erfordern aus ähnlichen Gründen entsprechende Maßnahmen für die einwandfreie Datensynchronisation.

Es ist bereits allgemein bekannt, zu Beginn eines jeden Datenblocks ein Steuerwort vorzusehen, aus dessen Detektion ein Synchronisiersignal gewonnen werden kann. Viele Systeme und Geräte, insbesondere Tonbandgeräte für die Aufnahme und Wiedergabe digitaler Information, zeigen jedoch sogenannte »dropouts«. Hierunter werden sporadische Informationsverluste verstanden, die beispielsweise durch Fehlerstellen im Magnetband bzw. in einem anderen Speichermedium verursacht werden. Der Verlust des gesamten oder eines Teils des synchronisierenden Steuerwortes kann in keinem System zugelassen werden, das von einer aktiven Synchronisation Gebrauch macht.

Der Erfindung liegt die Aufgabe zugrunde, für ein System zur Steuerung der Übertragung von durch Zeitschlitze in Blöcke unterteilter digitaler Information der einleitend beschriebenen Art eine Lösung anzugeben, die auch bei vorhandenen Störungen ein sicheres Erkennen des synchronisierenden Steuerwortes und damit eine einwandfreie Synchronisation ermöglicht.

Diese Aufgabe wird gemäß der Erfindung dadurch gelöst, daß die Anfangssynchronisierinformation zur Erzeugung eines eine Referenzzeit für jeden Informationsblock darstellenden Signals dient und die weiteren Synchronisierinformationen eine Reihe von zeitlich getrennten digitalen Worten darstellen, die jeweils eine codierte Angabe ihres Abstandes von der Position der genannten Referenz sind, daß dementsprechend bei der aufeinanderfolgenden Decodierung diese Worte zu Beginn eines Blocks der taktgesteuert ausgeführte erste Zähler in Abhängigkeit wenigstens eines der decodierten Worte gesetzt wird, der dazu dient, taktgesteuert in Richtung auf einen der Referenzzeit entsprechenden Zählwert zu zählen, daß außerdem jedes weitere decodierte Wort lediglich dann korrigiert wird, wenn keine Übereinstimmung vorhanden ist und daß die Anzahl der Übereinstimmungen in einem zweiten Zähler gezählt und das Synchronisiersignal erzeugt wird, wenn der erste Zähler den genannten Zählwert unter der Voraussetzung erreicht, daß wenigstens eine vorgegebene Anzahl von Übereinstimmungen im zweiten Zähler gezählt worden ist.

Das System nach der Erfindung gewährleistet auch dann eine stets einwandfreie Synchronisation, wenn durch mechanische oder andere Änderungen in den Eigenschaften eines Bandgerätes die Zeitschlitze zwischen den Informationsblöcken nicht genau festliegen oder nicht genau bestimmbar sind.

Anhand eines in der Zeichnung dargestellten Ausführungsbeispiels soll die Erfindung im folgenden noch näher erläutert werden. In der Zeichnung bedeutet

Fig. 1 die schematische Darstellung eines bevorzugten Formats für die zu steuernde Information,

Fig. 2 einen nähere Einzelheiten aufweisenden Abschnitt aus dem Format nach Fig. 1,

Fig. 3 ein Blockschaltbild des relevanten Teiles einer Synchronisieranordnung.

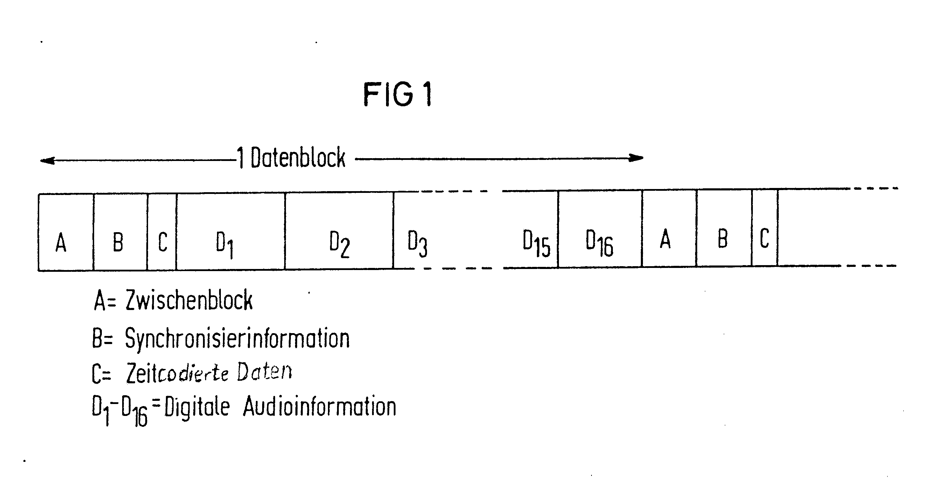

Das in Fig. 1 dargestellte mögliche Format für eine nach der Erfindung zu übertragende und zu steuernde Information stellt einen Datenblock dar, dem ein Zwischenblock A voransteht und der Teile B, C und D1 bis D16 aufweist. Der Teil B stellt die Synchronisierinformation und der Teil C die zu übertragenden, beispielsweise zeitcodierten Daten dar, die im Hinblick auf die Erfindung keine besondere Bedeutung haben. Die Teile D1 bis D16 schließlich sind Unterblöcke einer beispielsweise digitalen Audioinformation. Einem solchen Format liegt das Format eines Fernsehbildsignals zugrunde. Die Zeit jedes Teils des Blockes entspricht dabei einer Zeileninformation. Ein vollständiger Block hat hierbei eine Periode von 20 ms und enthält beispielsweise 313 Zeilen. Das eine Dauer von 20 Zeilen aufweisende Taktsignal kann im Zwischenblock enthalten sein und stellt in diesem Falle eine Zeitperiode dar, in der das Aufnahmegerät von einer Eingangssignalquelle auf eine andere für Zwecke des »Editing« umgeschaltet werden kann. Darüber hinaus ermöglicht dieses Format die Verwendung eines Aufnahmegerätes mit Wendelabtastung, bei dem ein geringer Teil des Zwischenblockabschnitts üblicherweise im Intervall zwischen zwei aufeinanderfolgenden Abtastungen verloren geht. Der Decodierer, der für die Rückgewinnung der Information benötigt wird, kann einen Taktoszillator aufweisen, dessen Phase vom Taktsignal bestimmt wird, das durch die aufeinanderfolgenden Zeitschlitze zwischen den Blöcken verfügbar ist.

Die Synchronisierinformation B belegt die ersten drei Zeilen des Datenblocks aus den Teilen B, C und D1 bis D16 und macht, wie noch ausgeführt werden wird, von der Festlegung der Phase eines Hilfsgenerators Gebrauch, der Synchronisiersignale für die Steuerung der zu decodierenden Information des Restdatenblockes erzeugt.

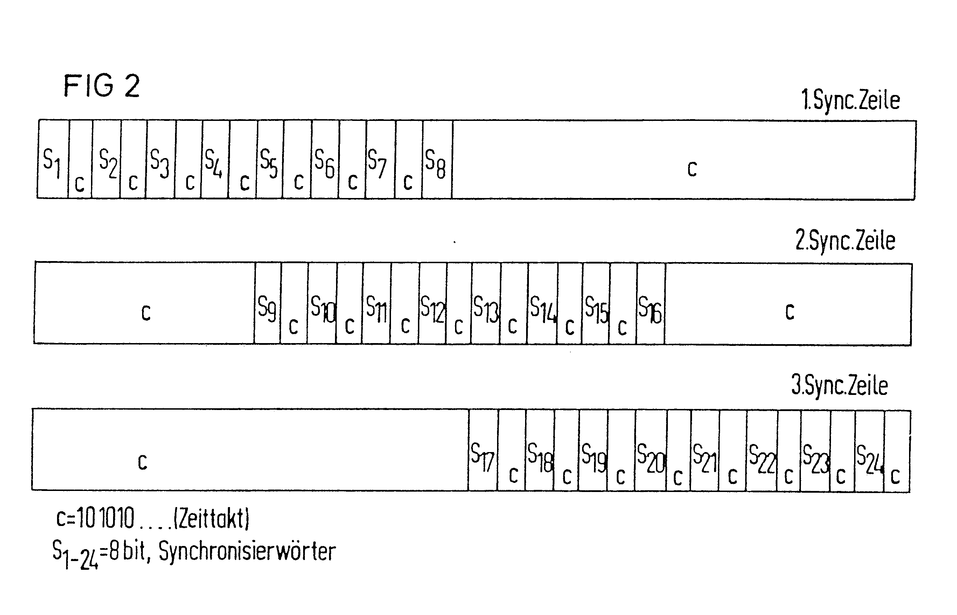

Ein geeignetes Format für die Synchronisierinformation zeigt Fig. 2. Eine Reihe von in diesem Beispiel jeweils aus acht Bits bestehenden Worten werden am Anfang der ersten Zeile, in der Mitte der zweiten Zeile und am Ende der dritten Zeile angeordnet. Bei diesem Beispiel gibt es somit vierundzwanzig codierte Synchronisierworte S1 bis S24. Der Rest jeder Zeile ist mit einem Taktsignal c belegt, das aus der kontinuierlichen Reihenfolge von Bits 101010 . ... besteht. Ein solches Taktsignal c belegt auch jeden 8-Bit-Abschnitt zwischen den Synchronisierworten S1 bis S24. Jedes Synchronisierwort ist eindeutig und vorzugsweise so gewählt, daß wenn es nach links oder rechts mit anderen benachbarten Bits verschoben wird, kein anderes von irgendeinem der übrigen Synchronisierworte der Serie bilden kann. Daraus folgt, daß die Anzahl der möglichen 8-Bit-Worte begrenzt ist und es darüber hinaus bei diesem besonderen Informationsformat nicht möglich ist, alle drei Zeilen mit 8-Bit-Worten anzufüllen, die sich mit 8-Bit-Abschnitten für Taktsignale abwechseln.

Jedes Synchronisierwort ist bei diesem Format indirekt hinsichtlich des Abstandes zu einem synchronisierenden Bezugspunkt festgelegt, der dabei eine durch das Bitmuster ausgedrückte Zahl ist. Der synchronisierende Bezugspunkt ist dabei durch das Ende der dritten Zeile vorgegeben. Der Zusammenhang jedes Synchronisierwortes mit dem jeweiligen Abstand ist mittels eines anderen jeweiligen Wortes gegeben, das vom auch eine Adresse darstellenden Synchronisierwort aus einem ROM ausgelesen werden kann.

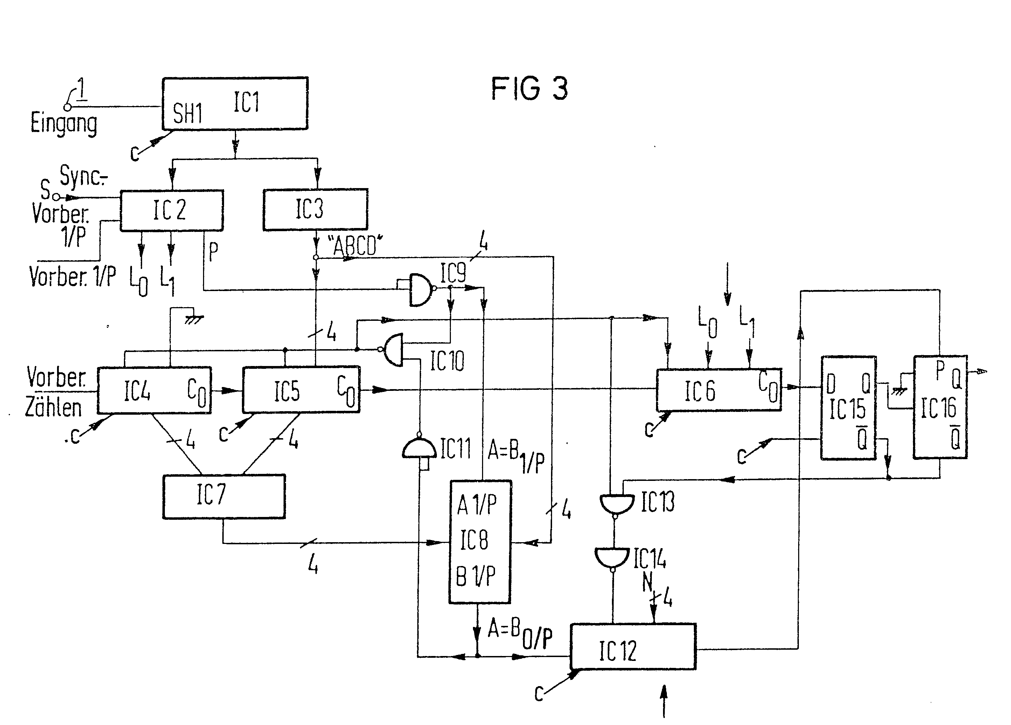

Der Synchronisiervorgang soll nun anhand der in Fig. 3 dargestellten Schaltung noch näher beschrieben werden.

Die ankommenden Daten werden über den Eingangsanschluß 1 einem getakteten Schieberegister IC1 zugeführt, das diese Daten jeweils in 8-Bit-Worten an zwei ROMs IC2 und IC3 weitergibt. Diese ROMs nehmen die Daten auf und dienen der Erkennung der Synchronisierworte. Wenn ein Synchronisierwort erkannt ist, geben die ROMs die Signale $L_0$, $L_1$, P und »ABCD« an ihre Ausgänge dann ab, wenn am Eingang S des ROMs IC2 ein Vorbereitungssignal SYNC ansteht. Die Signale $L_0$ und $L_1$ werden dem Endabschnitt eines getakteten ersten Zählers zugeführt, der aus den Zählerstufen IC4, IC5 und IC6 besteht. Die Signale $L_0$ und $L_1$ legen zusammen mit den Signalen ABCD die Zeit fest, die der erste Zähler zählen muß, bevor er das Ende der dritten Zeile des die Synchronisierinformation aufweisenden Teils B eines Informationsblocks erreicht. Der Impuls P wird jedesmal dann erzeugt, wenn ein Synchronisierwort auftritt. Beim erstmaligen Auftreten eines Synchronisierwortes wird der erste Zähler durch das Wort ABCD gesetzt, der hierbei durch die Gatter IC9 und IC10 vorbereitet wird.

Der durch die Zählerstufen IC4 und IC5 gegebene Zählerstand des ersten Zählers wird mittels des ROMs IC7 decodiert. Stimmt der Zählerstand genau mit dem Synchronisierwort überein, dessen Decodierung das Wort ABCD ergab, dann gibt das ROM das gleiche Wort ABCD ab, was immer auch dieses Wort sein mag.

Der Impuls P bewirkt seinerseits das Setzen des zweiten Zählers IC12 für eine vorgegebene Zahl N, die eine Mindestzahl von Synchronisierworten festlegt, die richtig erkannt sein müssen, wenn das ausgangsseitige Synchronisiersignal erzeugt werden soll.

Sobald ein zweites Synchronisierwort festgestellt wird, prüft der Komparator IC8 die Übereinstimmung mit dem betreffenden Ausgangswort ABCD und dem Ausgangssignal des ROMs IC7, das dem Zählerstand des ersten Zählers entspricht. Wenn die Übertragung der Daten einwandfrei synchronisiert ist, hält die Erzeugung der Synchronisierworte mit dem Fortschreiten des ersten Zählers Schritt, so daß zwischen dem Ausgang des ROMs IC7 und dem Ausgang des ROMs IC3 stets Übereinstimmung vorhanden ist. Stellt der Komparator diese Übereinstimmung fest, dann wird der Impuls, welcher am Ausgang des Gatters IC10 erscheinen würde, um den ersten Zähler mit dem erneut erkannten Synchronisierwort zu setzen, unterdrückt und gleichzeitig der zweite Zähler IC12 um »1« erhöht. Eine entsprechende Prüfung wird für jedes ankommende Synchronisierwort so lange durchgeführt, bis der zweite Zähler IC12 die vorgegebene Anzahl, beispielsweise 15, gezählt hat. Hat der zweite Zähler IC12 diese Zählstellung erreicht, dann erzeugt er ein Vorbereitungssignal für das zweite der beiden hintereinander geschalteten D-Flip-Flops IC15 und IC16.

Wird jedoch die Übereinstimmung nicht festgestellt, dann wird der Zählerstand der Zählerstufe IC5 des ersten Zählers dahingehend geändert, daß er mit dem Ausgang des ROMs IC3 übereinstimmt und zwar durch Setzen dieser Zählerstufe mit dem Ausgangssignal dieses Speichers.

Der erste Zähler ist so ausgelegt, daß er mit seiner Zählerstufe IC6 die Zählstellung am Ende der dritten Zeile erreicht. In dieser Zählstellung veranlaßt die Zählerstufe IC6 die Rückstellung des D-Flip-Flops IC16 über das D-Flip-Flop IC15. Die Anstiegsflanke des Befehlsausgangs des D-Flip-Flops IC16 bildet dann das gewünschte Synchronisiersignal.

Wenn der zweite Zähler IC12 die Mindestanzahl zu erkennender Synchronisierworte gezählt hat, schaltet der erwähnte Hilfsgenerator das Vorbereitungssignal am Vorbereitungseingang des ROMs IC2 ab und beendet dadurch die Erzeugung des Impulses P. Damit ist dieses ROM für den Rest des ankommenden Datenblocks gesperrt. Darüber hinaus kann das Vorbereitungssignal dazu benutzt werden, das Erkennen eines Synchronisierwortes nur in einem Zeitbereich zu gestatten, in dem ein Synchronisierwort zu erwarten ist. Eine solche Art der Vorbereitung trägt den Zeitänderungen Rechnung, die durch »Editing« und mechanische Störungen des Bandtransportes verursacht werden.

**Patentansprüche**

1. System zur Steuerung der Übertragung von durch Zeitschlitze in Blöcke unterteilter digitaler Information, bei dem jeder Block eine Anfangssynchronisierinformation aufweist, an die sich weitere Synchronisierinformationen und in Teilblöcke unterteilte Daten anschließen und bei dem die Synchronisierinformationen zur Steuerung eines ersten Zählers herangezogen werden, dadurch gekennzeichnet, daß die Anfangssynchronisierinformation zur Erzeugung eines eine Referenzzeit für jeden Informationsblock darstellenden Signals dient und die weitere Synchronisierinformationen eine Reihe von zeitlich getrennten digitalen Worten darstellen, die jeweils eine codierte Angabe ihres Abstandes von der Position der genannten Referenz sind, daß dementsprechend bei der aufeinanderfolgenden Decodierung dieser Worte zu Beginn eines Blocks der taktgesteuert ausgeführte erste Zähler (IC4, IC5, IC6) in Abhängigkeit wenigstens eines der decodierten Worte (ABCD) gesetzt wird, der dazu dient, taktgesteuert in Richtung auf einen der Referenzzeit entsprechenden Zählwert zu zählen, daß außerdem jedes weitere decodierte Wort mit dem Zählerinhalt auf Übereinstimmung verglichen und der erste Zähler mit Bezug auf ein decodiertes Wort lediglich dann korrigiert wird, wenn keine Übereinstimmung vorhanden ist und daß die Anzahl der Übereinstimmungen in einem zweiten Zähler (IC12) gezählt und das Synchronisiersignal erzeugt wird, wenn der erste Zähler den genannten Zählwert unter der Voraussetzung erreicht, daß wenigstens eine vorgegebene Anzahl von Übereinstimmungen im zweiten Zähler gezählt worden ist.

2. System nach Anspruch 1, dadurch gekennzeichnet, daß die in Teile (A, B, C, D1, D2 . . . D16) unterteilten Datenblöcke ein internes Taktsignal aufweisen, das den Arbeitsablauf des taktgesteuerten ersten Zählers (IC4, IC5, IC6) und die Decodierung der Worte steuert.

3. System nach Anspruch 1 oder 2, dadurch gekennzeichnet, daß die Decodierung der Worte dann verhindert wird, wenn der zweite Zähler (IC12) eine vorgegebene Anzahl von Übereinstimmungen gezählt hat.

4. System nach einem der vorhergehenden Ansprüche, dadurch gekennzeichnet, daß die Synchronisiereinrichtung für die Ableitung eines Synchronisiersignals zusätzlich die im folgenden aufgeführten Schaltungsteile aufweist

a)    Mittel (IC15, IC16), die bei Erreichen des Endstandes des ersten und zweiten Zählers ansprechen, um das Synchronisiersignal zu erzeugen,

b)    einen Decoder (IC7), der auf die Synchronisierinformationen anspricht,

c)    einen eine decodierte Synchronisierinformation mit dem augenblicklichen Inhalt des ersten Zählers vergleichenden Komparator (IC8), der das Vorhandensein einer Übereinstimmung feststellt,

d)    Mittel (IC9, IC10, IC11), die bei Feststellung der Übereinstimmung ansprechen, um das Neusetzen des ersten Zählers durch den Decoder zu verhindern und dieses Neusetzen zu gestatten, wenn keine Übereinstimmung festgestellt wird.

5. System nach Anspruch 4, dadurch gekennzeichnet, daß ein Hilfsgenerator vorgesehen ist, der die Decodierung der Blockinformation steuert und dessen Phase vom Synchronisiersignal bestimmt ist.

**Claims**

1. System for controlling the transmission of digital information divided into blocks by means of time slots, wherein each block has an item of initial synchronising information which is followed by further items of synchronising information and data divided into part-blocks, and wherein the items of synchronising information are used for the control of a first counter, characterised in that the initial synchronising information serves to produce a signal which represents a reference time for each information block, and the further items of synchronising information represent a series of digital words which are separated in terms of time and which respectively constitute a coded statement of their distance from the position of said reference, that in accordance therewith during the consecutive decoding of these words, at the beginning of a block, the first counter (IC4, IC5, IC6), which is designed so as to be clock-pulse-controlled, is set in dependence upon at least one of the decoded words, which counter serves to count in the direction of a count value which corresponds to the reference time, that furthermore each further decoded word is compared with the counter content as to conformity and the first counter is only corrected with regard to a decoded word when there is no conformity, and that the number of the conformities is counted in a second counter (IC12) and the synchronising signal is produced if the first counter reaches said count value provided that at least a predetermined number of conformities have been counted in the second counter.

2. System as claimed in claim 1, characterised in that the data blocks divided into part (A, B, C, D1, D2 ... D16) have an internal clock pulse signal which controls the working sequence of the clock-pulse-controlled first counter (IC4, IC5, IC6) and the decoding of the words.

3. System as claimed in claim 1 or 2, characterised in that the decoding of the words is prevented when the second counter (IC12) has counted a predetermined number of conformities.

4. System as claimed in one of the preceding claims, characterised in that for the derivation of a synchronising signal the synchronising device additionally comprises the switching components stated in the following

a) means (IC15, IC16) which respond when reaching the final position of the first and second counter in order to produce the synchronising signal,

b) a decoder (IC7) which responds to the items of synchronising information,

c) a comparator (IC8) which compares a decoded item of synchronising information with the instantaneous content of the first counter and which ascertains the presence of a conformity,

d) means (IC9, IC10, IC11) which respond when ascertaining the conformity in order to prevent the re-setting of the first counter by the decoder and in order to allow the resetting if no conformity is ascertained.

5. System as claimed in claim 4, characterised in that there is provided an auxiliary generator which controls the decoding of the block information and whose phase is determined by the synchronising signal.

**Revendications**

1. Système pour la commande de la transmission d'une information numérique subdivisée en blocs par des portes de temps, dans lequel chaque bloc présente une information de synchronisation de tête à laquelle font suite d'autres informations de synchronisation ainsi que des données subdivisées en blocs partiels, et dans lequel on a recours aux informations de synchronisation pour la commande d'un premier compteur, caractérisé par le fait que l'information de synchronisation de tête sert à la production d'un signal représentant un temps de référence pour chaque bloc d'information et que les autres informations de synchronisation représentent une série de mots numériques séparés dans le temps et dont chacun constitue une indication codée de sa distance par rapport à ladite référence, que de façon correspondante, lors du décodage successif de ces mots et au début d'un bloc, ledit premier compteur (IC4, IC5, IC6) à commande cadencée est activé en fonction d'au moins l'un des mots décodé (ABCD) qui sert à compter en cadence, en direction d'une valeur de comptage qui corespond au temps de référence, qu'en outre chaque autre mot décodé est comparé avec le contenu du compteur en vue de déterminer la concordance, alors que le premier compteur est corrigé, en rapport avec un mot décodé, uniquement en l'absence de la concordance, et que le nombre des concordances est compté dans le second compteur (IC12) et que le signal de synchronisation est produit lorsque le premier compteur a atteint ladite valeur de comptage à la condition que l'on ait compté dans le second compteur au moins un nombre prédéterminé de concordances.

2. Système selon la revendication 1, caractérisé par le fait que les blocs de données subdivisés en parties (A, B, C, D1, D2 ... D16), présentent un signal de cadence interne qui commande le déroulement de travail du premier compteur à commande cadencée (IC4, IC5, IC6), ainsi que le cécodage des mots.

3. Système selon la revendication 1 ou 2, caractérisé par le fait que le décodage des mots est empêché lorsque le second compteur (IC12) a compté un nombre prédéterminé de concordances.

4. Système selon l'une des revendications précédentes, caractérisé par le fait que le dispositif de synchronisation servant à dériver un signal de synchronisation comporte, en plus, les éléments de circuit mentionnés ci-dessous,

a) des moyens (IC15, IC16) qui, lorsque l'état final du premier et du second compteur est atteint, répondent pour produire le signal de synchronisation,

b) un décodeur (IC7) qui répond à l'information de synchronisation,

c) un comparateur (IC8) qui compare une information de synchronisation décodée avec le contenu instantané du premier compteur, lequel comparateur constate la présence d'une concordance,

d) des moyens (IC9, IC10, IC11) qui, lors de la constatation de la concordance, répondent pour empêcher la remise à l'état initial du premier compteur par le décodeur et autorise cette remise à l'état initial lorsqu'une concordance n'a pas été constatée.

5. Système selon la revendication 4, caractérisé par le fait qu'il est prévu un générateur auxiliaire qui commande le décodage de l'information par bloc, et dont la phase est déterminée par le signal de synchronisation.

# FIG 1

$$\longleftarrow \text{1 Datenblock} \longrightarrow$$

| A | B | C | $D_1$ | $D_2$ | $D_3$ | $D_{15}$ | $D_{16}$ | A | B | C | |

A= Zwischenblock

B= Synchronisierinformation

C= Zeitcodierte Daten

$D_1$-$D_{16}$ =Digitale Audioinformation

0 032 232

## FIG 2

1.Sync.Zeile

| S1 | c | S2 | c | S3 | c | S4 | c | S5 | c | S6 | c | S7 | c | S8 | c |

2.Sync.Zeile

| c | S9 | c | S10 | c | S11 | c | S12 | c | S13 | c | S14 | c | S15 | c | S16 | c |

3.Sync.Zeile

| c | S17 | c | S18 | c | S19 | c | S20 | c | S21 | c | S22 | c | S23 | c | S24 | c |

c = 10 1010 . . . . (Zeittakt)

$S_{1-24}$ = 8 bit, Synchronisierwörter

FIG 3